# FASCICULE DE BREVET EUROPEEN

(11) **EP 0 711 072 B1**
(45) Date de publication et mention de la délivrance du brevet: **22.12.1999**
(21) Numéro de dépôt: 95402462.6
(22) Date de dépôt: 03.11.1995
(51) Int. Cl.: H04N 5/907, H04N 5/44, H04N 5/775

(54) **Procédé et système de gestion mémoire**
Methode und System zur Speicherverwaltung
Method and system for memory control

(30) Priorité: 04.11.1994 FR 9413234
(43) Date de publication de la demande: 08.05.1996
(73) Titulaire: THOMSON multimedia, 92648 Boulogne Cédex (FR)
(72) Inventeur: Hackett, Andrew, F-92050 Paris la Defense (FR)
(74) Mandataire: Ruellan-Lemonnier, Brigitte

(56) Documents cités:
- FR-A- 2 646 306
- FR-A- 2 700 908
- US-A- 5 329 320

## Description

L'invention concerne un procédé et un système de gestion mémoire et plus particulièrement un système dans lequel les informations sont à enregistrer par paquets successifs et sont à lire dans le même ordre que celui de l'enregistrement. Chaque paquet forme un ensemble d'informations indissociables à lire en bloc. Par ailleurs, les paquets d'informations peuvent être d'importances différentes.

L'invention est plus particulièrement applicable à l'enregistrement de séquences vidéo notamment dans un téléviseur pour la revisualisation par le téléspectateur de séquences d'images qui viennent d'être reçues. Elle permet donc au téléspectateur de réafficher en différé des séquences qu'il vient de voir quelques instants auparavant.

Pour ce faire, on prévoit d'enregistrer au moins temporairement les dernières séquences reçues. De plus, pour augmenter les capacités d'enregistrement on a intérêt d'utiliser les techniques de compression d'images et d'enregistrement. Il découle de cela que les différentes images ainsi codées nécessitent des capacités mémoire différentes. Par contre, pour une capacité mémoire donnée, on pourra enregistrer un plus grand nombre d'images vidéo codées.

Par ailleurs, comme on l'a mentionné, l'enregistrement des séquences se fait de manière continue de façon que l'utilisateur puisse demander à revisualiser à tout moment ; par exemple, les cinq dernières secondes qui viennent juste d'être reçues.

Tout cela impose des contraintes que l'invention se propose de résoudre.

L'invention concerne donc un procédé de gestion mémoire selon lequel les informations sont organisées en paquets, caractérisé en ce que lors de l'enregistrement dans une mémoire d'informations on enregistre, dans une mémoire d'adresses, les adresses des paquets dans la mémoire d'informations et qu'on enregistre dans un registre d'adresse de lecture l'adresse de la mémoire d'adresse où se trouve l'adresse en mémoire d'informations du paquet le plus ancien à lire.

Plus particulièrement, l'invention concerne un procédé de gestion mémoire selon lequel :
- on enregistre en série les informations des différents paquets en des adresses successives d'une mémoire d'informations ;
- on détecte le début de chaque paquet et on identifie son adresse dans la mémoire d'informations ;
- on enregistre cette adresse dans une mémoire d'adresses à des adresses successives de la mémoire d'adresses ;
- on enregistre l'adresse, relative à la mémoire d'informations, du premier paquet ou son adresse, relative à la mémoire d'adresses dans un registre d'adresse de lecture ;
- on compare à chaque enregistrement d'une information dans la mémoire d'informations, l'adresse courante (Add) de cette information à celle (Add0) du premier paquet, et en cas d'égalité, on incrémente de 1 le contenu du registre d'adresse de lecture.

L'invention concerne également un système de gestion mémoire d'enregistrement/lecture d'informations organisées en paquets comprenant :
- une mémoire d'informations ;
- un premier pointeur d'adresse permettant l'enregistrement en des adresses successives des différentes informations successives ;
- une mémoire d'adresses ;
- un deuxième pointeur de mémoire d'adresses contenant une adresse de la mémoire d'adresses ;
- un circuit de détection détectant chaque début de paquet et commandant à chaque détection la progression d'un pas du pointeur de mémoire d'adresses et l'enregistrement d'une adresse fournie par le premier pointeur, dans la mémoire d'adresses à l'adresse indiquée par le deuxième pointeur ;
- un registre d'adresse de lecture dans lequel est enregistrée l'adresse, dans la mémoire d'adresses, de l'emplacement contenant l'adresse, en mémoire d'informations, du premier paquet à lire.

Les différents objets et caractéristiques de l'invention apparaîtront plus clairement dans la description qui va suivre et dans les figures annexées qui représentent:
- les figures 1a à 1c, un exemple de réalisation de l'invention permettant de réaliser des enregistrements en mémoire ;
- la figure 2, un exemple de réalisation de l'invention permettant de réaliser une lecture en mémoire ;
- les figures 3, 4, 5, des organigrammes de fonctionnement d'un exemple de procédé selon l'invention ;
- les figures 6a et 6b des exemples de circuits permettant de revisionner au ralenti une séquence vidéo dans un poste de télévision.

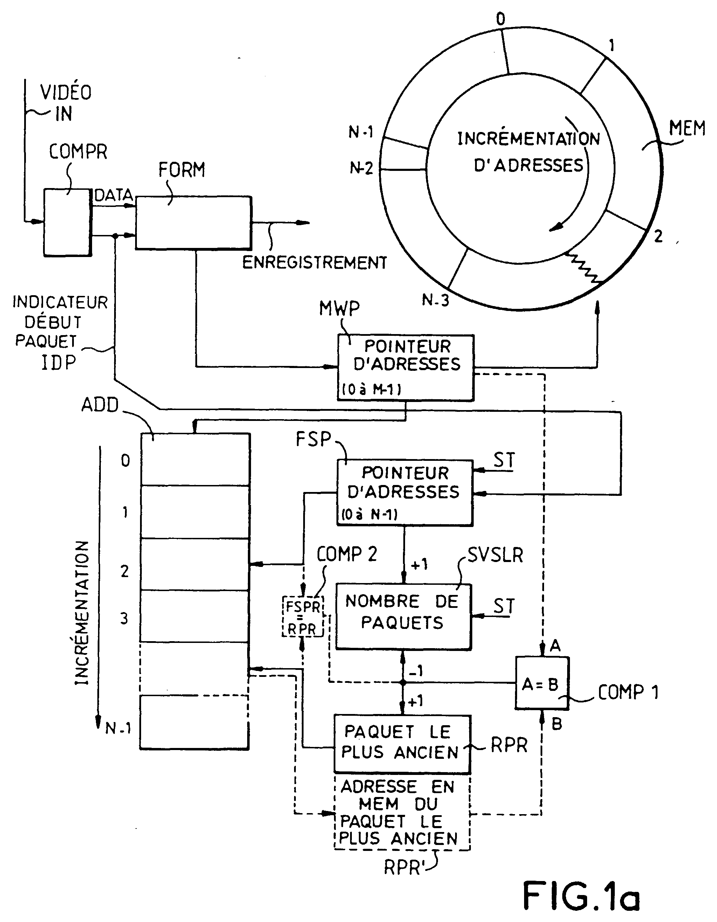

En se reportant à la figure 1a, on va donc tout d'abord décrire un exemple de réalisation du système de l'invention dans sa fonction d'enregistrement d'informations dans une mémoire.

Une mémoire MEM représentée de façon symbolique sous forme circulaire comporte un nombre déterminé d'emplacements.

Des informations arrivent sur une ligne IN par paquets d'informations. Elles sont reçues dans un circuit de compression COMPR qui réalise une compression des données d'une manière connue dans la technique puis dans un circuit de formatage FORM qui formate les informations à l'intention de la mémoire MEM. A ce stade le circuit COMPR fait subir aux paquets d'informations un traitement dit de compression pour réduire la longueur de chaque paquet. Les paquets sont alors de longueurs différentes : le circuit FORM présente à la même mémoire MEM les paquets d'informations de longueurs différentes, information par information. Un circuit d'adressage de la mémoire MEM ou pointeur d'inscription MWP avance d'un pas à chaque information binaire et commande l'adressage de la mémoire MEM à une adresse Add. Chaque information est communiquée à la mémoire MEM et est inscrite à une adresse Add indiquée par MWP.

Par ailleurs, chaque paquet d'informations comporte un signal de début de paquet. Par exemple dans un application à l'enregistrement d'images vidéo, un paquet d'information correspond à une image (ou trame) et débute par un signal de synchronisation verticale. Chaque début de paquet d'informations IDP est indiqué à un circuit d'adressage, ou pointeur de début de paquet FSP, d'une mémoire auxiliaire d'adressage ADD.

Cette mémoire ADD est destinée à recevoir les adresses Addi de chaque début de paquet. A chaque début de paquet, le pointeur FSP adresse un emplacement mémoire, lequel enregistre la position du pointeur MWP qui contient une adresse correspondant à une adresse Addi.

Les différents paquets d'informations qui arrivent sur l'accès IN sont ainsi enregistrés dans la mémoire MEM au fur et à mesure qu'ils arrivent. En même temps les adresses Addi de début de paquets dans la mémoire MEM sont enregistrées dans la mémoire d'adresses ADD.

Cependant, la mémoire MEM a, bien entendu, une capacité déterminée et lorsque la mémoire MEM est remplie, le pointeur MWP fournit une adresse d'un emplacement déjà enregistré.

L'objet du système étant de stocker les plus récents paquets d'information, on choisit "d'écraser" (c'est-à-dire d'enregistrer en lieu et place) les emplacements déjà enregistrés et de leur superposer les nouveaux paquets qui arrivent. Dans ce cas, pour pouvoir relire les paquets d'informations selon leur ordre chronologique d'arrivée, il faut connaître le plus ancien paquet enregistré qui n'est plus celui qui vient d'être "écrasé".

Pour cela, on enregistre dans un registre RPR l'adresse Addp de ADD contenant l'adresse Addi du premier paquet non écrasé (ou plus ancien paquet).

De plus, un registre SVSLR permet d'enregistrer le nombre de paquets valides en mémoire MEM.

A chaque enregistrement d'un paquet, on incrémente de 1 le contenu du registre SVSLR, sous la commande par exemple du pointeur de début de paquet FSP.

Lorsque la mémoire MEM a été complètement remplie, à chaque enregistrement d'une information dans la mémoire MEM, l'adresse Add de cette information est comparée à l'adresse Addi contenue dans la mémoire d'adresse ADD à l'adresse indiquée par le registre RPR. Si cette adresse Add est égale à l'adresse Addi, un circuit de comparaison COMP1 commande l'incrémentation de 1 du registre RPR et la décrémentation de 1 du registre SVSLR.

Ainsi, le registre RPR permettra d'obtenir, dans le registre ADD, l'adresse du plus ancien paquet en mémoire MEM. Le registre SVSLR fournira le nombre de paquets entiers et valides que l'on peut lire en mémoire MEM.

Pour permettre un traitement plus rapide, il est possible de prévoir un registre RPR' représenté en pointillés sur la figure 1a. Ce registre est destiné à recevoir l'adresse Addi contenue dans ADD et pointée par le registre RPR. Cette adresse est chargée dans RPR' à l'initialisation du système et chaque fois que le contenu du registre RPR est incrémenté de 1.

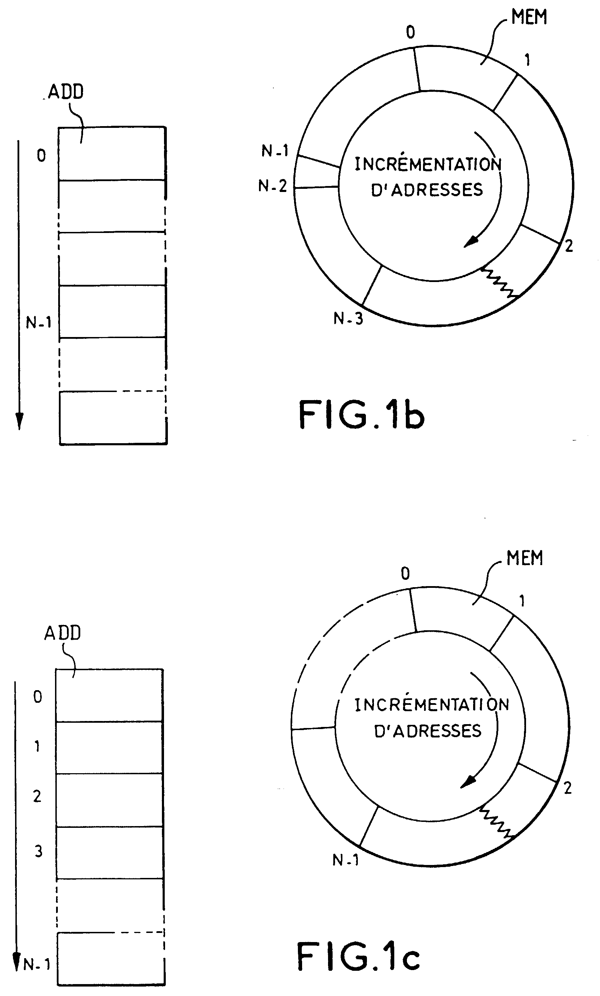

Il peut se trouver également que la mémoire MEM soit remplie alors que le nombre maximum d'adresses pouvant être enregistrées en mémoire ADD ne soit pas atteint (voir figure 1b). Cela peut être le cas lorsque par suite d'une compression un grand nombre de paquets sont de courte longueur. Par exemple dans l'enregistrement d'images vidéo, la compression d'un nombre d'images toutes de couleur uniforme pourront conduire à une compression maximale et les informations prendront peu de place en mémoire MEM.

Lorsque après avoir enregistré en mémoire ADD, par exemple, la N-1ème adresse Add, le paquet suivant arrive, son adresse doit être enregistrée à l'emplacement 0 de la mémoire ADD. On vient donc "écraser" en mémoire ADD, l'adresse Addi = 0 de la mémoire MEM. Le paquet d'informations à l'adresse 0 de la mémoire MEM ne sera donc plus lisible. Pour palier cette difficulté, un circuit de comparaison COMP2 compare le contenu du pointeur de début de paquet FSP au contenu du registre RPR qui contient l'adresse de ADD contenant l'adresse en mémoire MEM du paquet le plus ancien. Lorsque le comparateur COMP2 établit l'égalité entre les deux adresses, il commande l'incrémentation de 1 du registre RPR et la décrémentation de 1 du registre SVSLR.

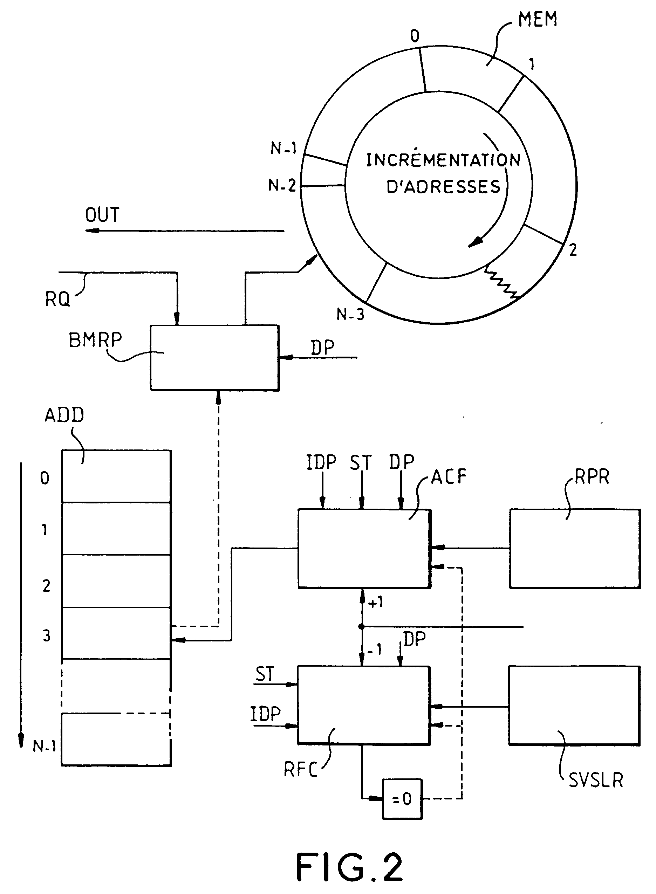

En se reportant à la figure 2, on va maintenant décrire le système de la figure 1a en fonctionnement de lecture.

La mémoire MEM contient des informations organisées en paquets successifs. La mémoire ADD contient en des emplacements successifs, les adresses Addi des débuts de paquets dans la mémoire MEM.

De plus, le registre RPR contient l'adresse Addp de la mémoire ADD contenant l'adresse Addi du paquet le plus ancien actuellement présent en mémoire MEM.

Le registre SVSLR contient le nombre de paquets disponibles en mémoire MEM.

Sur un ordre ST venant de l'extérieur, par exemple fourni par l'utilisateur, l'adresse contenue dans le registre RPR est enregistrée dans un registre d'adresse de lecture auxiliaire ACF de la mémoire d'adresse ADD. De plus, un compteur de paquets disponibles RFC est chargé par la valeur du registre SVSLR.

Le registre ACF adresse la mémoire ADD à une adresse Addi dont le contenu est transféré dans le pointeur BMRP de lecture de la mémoire MEM. Le début du paquet le plus ancien en mémoire MEM est ainsi adressé. Les informations contenues en mémoire MEM sont lues successivement et transférées vers la sortie OUT. Un circuit utilisateur, non représenté sur la figure, après réception d'une information fournit un signal RQ pour demander l'information suivante et commande l'incrémentation de +1 du pointeur BMRP. L'information suivante en mémoire MEM est transférée vers la sortie OUT.

Par ailleurs, le circuit utilisateur est capable de décoder les informations lues en mémoire MEM et est capable de détecter la fin d'un paquet (ou le début du paquet suivant). Il fournit alors un signal de début de paquet DP qui incrémente de 1 le registre ACF et qui décrémente de 1 le compteur RFC. Le contenu de ACF adresse la mémoire ADD dont le contenu d'un emplacement (Addi) est transféré dans le pointeur BMRP de la mémoire MEM.

Le fonctionnement se poursuit jusqu'à ce que le compteur RFC atteigne zéro. A ce moment, les contenus des registres RPR et SVSLR sont chargés respectivement dans le registre ACF et dans le compteur RFC et le fonctionnement peut reprendre comme précédemment.

De plus, le système prévoit de ne pouvoir entreprendre le fonctionnement en lecture que lorsqu'un paquet d'informations a été inscrit en mémoire MEM. Pour cela, le signal ST qui initialise le fonctionnement en mode lecture est transmis au pointeur FSP (figure 1a) et au registre SVSLR pour inhiber leur fonctionnement. Ensuite, l'indicateur de début de paquet suivant IDP (représenté en figure 1a) est transmis au registre ACF et au compteur RFC pour permettre le chargement du registre ACF et du compteur RFC respectivement par les registres RPR et SVSLR.

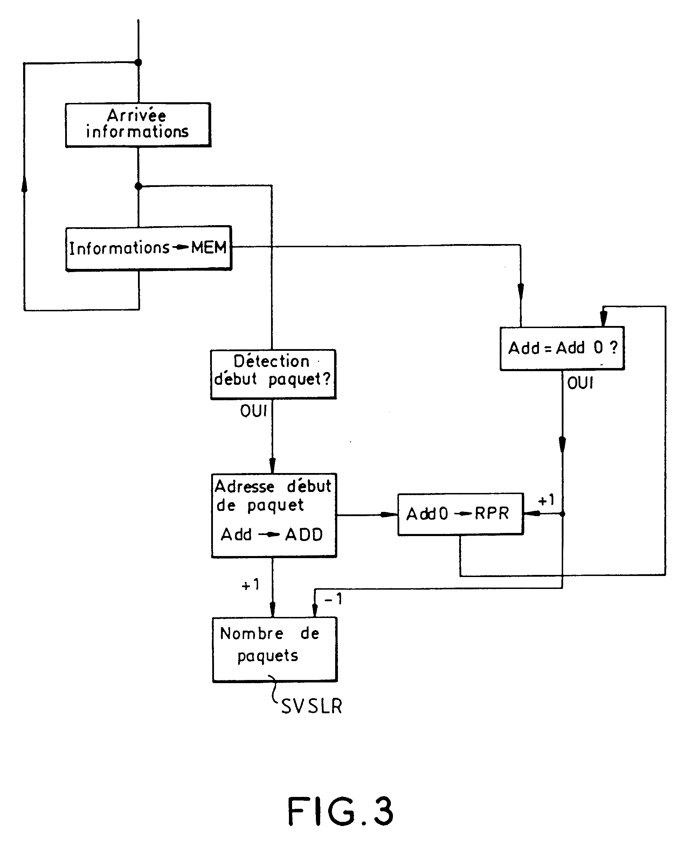

En se reportant aux figures 3 à 5, on va maintenant décrire un procédé de gestion d'une mémoire conforme à l'invention.

Selon l'organigramme de la figure 3, les informations qui arrivent sont enregistrées au fur et à mesure de leur arrivée dans la mémoire MEM ce qui est représenté par le rebouclage des fonctions "arrivée informations" et "informations → MEM".

Dans les arrivées d'informations on détecte les débuts de paquets. En cas de détection d'un début de paquet on enregistre l'adresse mémoire MEM (add) du début du paquet dans la mémoire d'adresses ADD. De plus, on incrémente de 1 un registre de nombre de paquets SVSLR.

Si le paquet détecté est le premier paquet enregistré, on met l'adresse Addo de la mémoire d'adresse correspondante dans un registre d'adresses de lecture RPR ce qui est noté "Add0 → RPR"".

Par ailleurs, à chaque enregistrement d'une information dans la mémoire MEM son adresse est comparée à l'adresse Add0 obtenue par le registre RPR dans la mémoire d'adresse ADD. En cas d'égalité, cela veut dire qu'on enregistre sur une information déjà enregistrée. Dans ce cas on incrémente de 1 le contenu du registre d'adresse de lecture RPR et on décrémente de 1 le registre de nombre de paquets SVSLR. La nouvelle adresse contenue dans RPR permet de lire une nouvelle adresse Addi dans ADD et de l'inscrire dans RPR'.

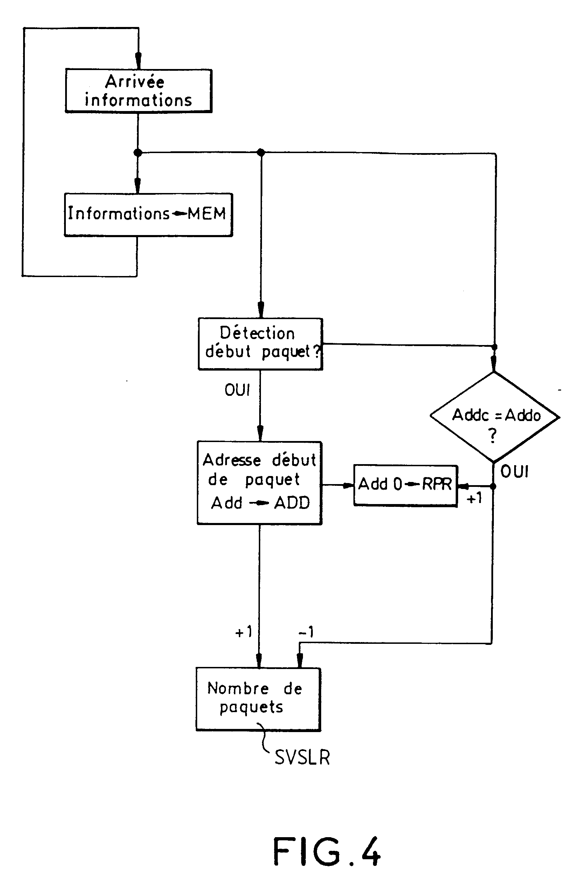

La figure 4 représente un perfectionnement du procédé décrit par l'organigramme de la figure 3. Selon ce perfectionnement, on prévoit le cas où la capacité de la mémoire d'adresse ADD est insuffisante au regard de la capacité de la mémoire d'informations MEM (cas schématisé sur la figure 1c).

Pour cela, à chaque enregistrement on compare l'adresse courant Addc de l'emplacement dans la mémoire MEM dans lequel on enregistre une information à l'adresse de début de paquet Add0 mise en mémoire dans la mémoire d'adresses ADD à l'adresse indiquée par le registre d'adresses de lecture RPR. Cela est noté "Addc = Add0 ?" En cas d'égalité, on incrémente de 1 le contenu du registre d'adresses de lecture RPR et on décrémente de 1 le contenu du registre de nombre de paquets SVSLR.

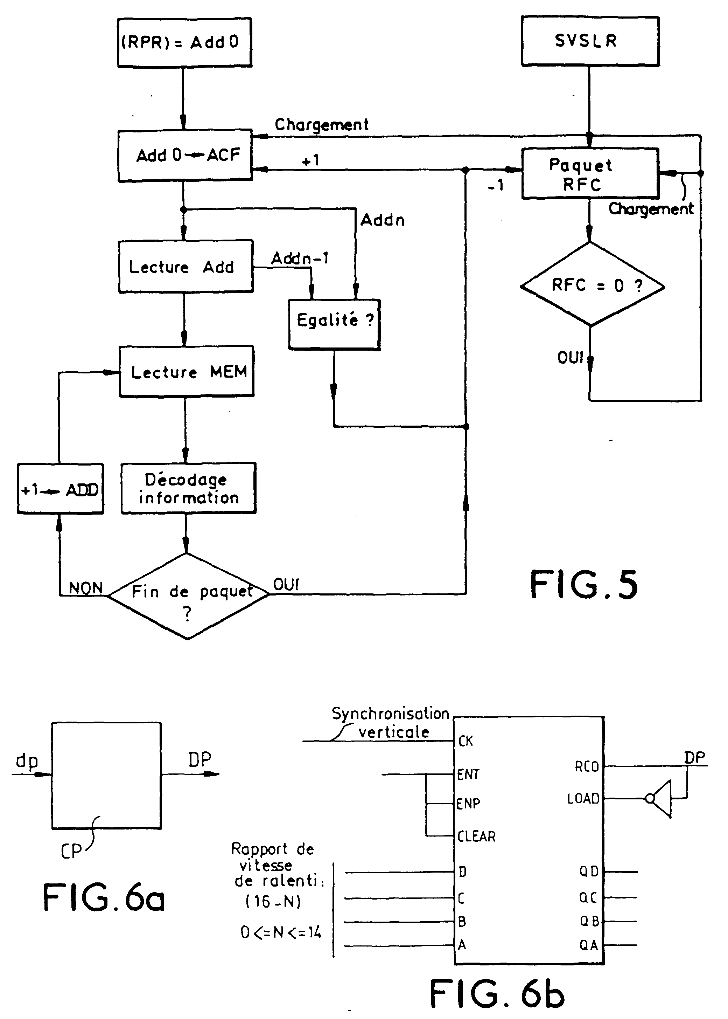

La figure 5 représente un exemple de procédé de lecture selon l'invention.

En début de lecture le contenu du registre de lecture contient l'adresse Add0 du registre d'adresse où est enregistré l'adresse du premier paquet à lire, ce qui est noté "(RPR) = Add0".

L'adresse Add0 est transférée dans un registre d'adresses auxiliaire ACF. Egalement, le nombre de paquets disponibles contenu dans le compteur de paquets SVSLR est transféré dans un compteur auxiliaire RFC.

Le registre d'adresse auxiliaire ACF permet d'obtenir dans la mémoire d'adresse ADD une adresse en mémoire d'informations MEM et de lire une information à cette adresse.

Cette information étant lue elle est décodée de façon à détecter la fin d'un paquet ou le début du paquet suivant (phase "fin de paquet"). Tant qu'une fin de paquet n'est pas détectée le système se reboucle sur la lecture du contenu de la mémoire MEM. Pour cela on incrémente l'adresse Add à l'adresse suivante.

Lorsqu'une fin de paquet est détectée, le registre d'adresse ACF est incrémenté de 1 et fournit l'adresse de début de paquet suivant. En même temps, le compteur auxiliaire RFC est décrémenté de 1.

Le fonctionnement précédent se poursuit jusqu'à ce que le compteur auxiliaire RFC soit mis en position zéro (RFC = 0 ?). Un ordre de rechargement est alors donné au registre d'adresses auxiliaire ACF qui est alors rechargé avec le contenu du registre d'adresse RPR. Le compteur auxiliaire RFC est également rechargé avec le contenu du compteur de paquets SVSLR.

Le fonctionnement peut alors être relancé.

Dans le cas d'une application à la télévision, les paquets d'informations sont des trames (ou images). Chaque trame est affichée durant un temps de trame. Pour obtenir une rediffusion au ralenti, l'invention prévoit que le système de lecture de la figure 2 affiche chaque trame durant un temps plus long qu'un temps de trame.

Comme on l'a vu, l'accès au début d'un paquet (ou début d'une trame) se fait par le transfert d'une adresse Add contenue dans la mémoire ADD vers le pointeur BMRP. Cela se fait sous la commande du signal DP. Pour garder une même trame affichée durant plusieurs temps de trames, on prévoit, à la fin d'une trame, de relire en mémoire MEM la trame qui vient d'être lue. Selon la vitesse de ralenti, on compte le nombre de fois que la même trame doit être lue et donc affichée et on ne passe à la trame suivante que lorsque la trame a été lue le nombre de fois désiré.

Comme représenté en figure 6a, un compteur CP reçoit un signal de fin de paquet dp qui est le signal de synchronisation verticale. En début de fonctionnement, ce compteur CP est mis dans une position déterminée selon la vitesse de visualisation désirée. A chaque signal dp, le compteur CP avance d'un pas. De plus, le signal dp commande le registre ACF pour afficher à nouveau l'image dont l'adresse de début est à la même adresse dans ADD.

Lorsque le compteur CP arrive en une position déterminée c'est-à-dire après affichage de la même image durant un temps déterminé, le compteur CP délivre le signal DP qui commande l'incrémentation de 1 du registre ACF et la décrémentation de 1 du compteur RFC.

Une façon simple de réaliser le compteur en prévoyant qu'une seule vitesse de ralenti, serait par exemple de prévoir un compteur du type représenté en figure 6b dont les entrées sont commandées par le signal de synchronisation verticale par une indication de rapport de vitesse de ralenti.

## Revendications

1. Procédé de gestion mémoire selon lequel les informations sont organisées en paquets, caractérisé en ce que lors de l'enregistrement dans une mémoire d'informations (MEM) on enregistre dans une mémoire d'adresses (ADD) les adresses des paquets dans la mémoire d'informations (MEM) et qu'on enregistre dans un registre d'adresse de lecture (RPR) l'adresse de la mémoire d'adresses (ADD) où se trouve l'adresse en mémoire d'informations du paquet le plus ancien à lire.

2. Procédé de gestion mémoire selon la revendication 1, caractérisé en ce que :
- on enregistre en série les informations des différents paquets en des adresses successives d'une mémoire d'informations (MEM) ;
- on détecte le début de chaque paquet et on identifie son adresse (Addi) dans la mémoire d'informations ( MEM) ;
- on enregistre cette adresse (Addi) dans la mémoire d'adresses (ADD) à des adresses (Addp) successives de la mémoire d'adresses;
- on enregistre l'adresse (Add0), relative à la mémoire d'informations (MEM), du premier paquet ou son adresse (Addp), relative à la mémoire d'adresses (ADD), dans un registre (RPR,RPR') d'adresse de lecture ;
- on compare à chaque enregistrement d'une information dans la mémoire d'informations (MEM), l'adresse courante (Add) de cette information à celle (Add0) du premier paquet, et en cas d'égalité, on incrémente de 1 le contenu du registre d'adresse de lecture (RPR).

3. Procédé selon la revendication 1, caractérisé en ce qu'on compte le nombre de paquets enregistrés et à chaque enregistrement d'un paquet dans la mémoire d'informations (MEM), on compare l'adresse courante d'enregistrement et l'adresse (Add0) fournie par le registre d'adresse (RPR), et en cas d'égalité on diminue de 1 le nombre de paquets.

4. Procédé selon la revendication 2, caractérisé en ce que à chaque enregistrement, on compare l'adresse (Addp) de l'emplacement de la mémoire d'adresses (ADD), dans lequel on enregistre l'adresse du paquet en mémoire d'informations (MEM), au contenu du registre d'adresse de lecture (RPR) et en cas d'égalité on incrémente de 1 le contenu du registre d'adresse de lecture (RPR).

5. Procédé selon la revendication 4, caractérisé en ce que en cas d'égalité on décrémente de 1 le nombre de paquets.

6. Procédé selon la revendication 5, caractérisé en ce que pour la lecture des paquets d'informations en mémoire d'informations (MEM) on utilise tout d'abord l'adresse contenue dans le registre d'adresse de lecture (RPR) pour obtenir l'adresse de paquet en mémoire (MEM) et qu'à chaque lecture d'un paquet on incrémente de 1 l'adresse contenue dans le registre de lecture (RPR) et on décrémente de 1 le nombre de paquets enregistrés.

7. Procédé selon la revendication 6, caractérisé en ce que le contenu du registre d'adresse de lecture (RPR) et le nombre de paquets sont transférés dans des registres auxiliaires et lorsque le nombre de paquets devient nul on recharge dans ces registres le contenu du registre d'adresse de lecture (RPR) et le nombre de paquets.

8. Système de gestion mémoire d'enregistrement/lecture d'informations organisées en paquets comprenant :
- une mémoire d'informations (MEM) ;
- un premier pointeur d'adresse (MWP) permettant l'enregistrement en des adresses (Add) successives des différentes informations successives ;
- une mémoire d'adresses (ADD) ;
- un deuxième pointeur (FSP) de mémoire d'adresses contenant une adresse (Addp) de la mémoire d'adresses (ADD) ;
- un circuit de détection détectant chaque début de paquet et commandant à chaque détection la progression d'un pas du pointeur (FSP) de mémoire d'adresses et l'enregistrement d'une adresse fournie par le premier pointeur, dans la mémoire d'adresses à l'adresse indiquée par le deuxième pointeur ;
- un registre d'adresse de lecture (RPR) dans lequel est enregistrée l'adresse (Addp), dans la mémoire d'adresses (ADD) de l'emplacement contenant l'adresse, en mémoire d'informations (MEM) du premier paquet à lire.

9. Système de gestion mémoire selon la revendication 8, caractérisé en ce qu'il comporte :
- un premier circuit de comparaison (COMP1) comparant chaque adresse successive contenue dans le premier pointeur à l'adresse du premier paquet à lire contenue dans la mémoire d'adresses (ADD) à l'adresse indiquée par le registre d'adresses de lecture (RPR), l'égalité entre ces deux adresses commandant l'incrémentation de 1 du contenu du registre d'adresse de lecture (RPR).

10. Système de gestion mémoire selon la revendication 9, caractérisé en ce qu'il comporte un registre auxiliaire (SVSLR) dans lequel est enregistré le nombre de paquets à lire et en ce que ladite égalité établie par le premier circuit de comparaison commande la décrémentation de 1 du contenu du registre auxiliaire (SVSLR).

11. Système de gestion mémoire selon la revendication 10, caractérisé en ce qu'il comporte un deuxième circuit de comparaison (COMP2) comparant le contenu du deuxième pointeur (FSP) et le contenu du registre d'adresse de lecture (RPR) et en cas d'égalité commande l'incrémentation de 1 du registre d'adresse de lecture (RPR) et la décrémentation de 1 du registre auxiliaire (SVSLR).

12. Système de gestion mémoire selon l'une des revendications 8 à 11, caractérisé en ce qu'il comporte :
- un troisième pointeur d'adresse (BMRP) permettant la lecture en des adresses successives (Add) de la mémoire d'informations (MEM) de différentes informations ;
- un registre d'adresse de lecture auxiliaire (ACF) permettant d'adresser la mémoire d'adresses (ADD) ;
- un compteur de paquets restant à lire (RFC) ;
un ordre de fonctionnement de lecture (ST) commandant le chargement du contenu du registre d'adresse de lecture (RPR) dans le registre de lecture auxiliaire (ACF) et le contenu du registre auxiliaire (SVSLR) dans le compteur de paquets (RFC) ; un circuit de détection de fin ou de début de paquets (dp) fournissant un signal de début de paquet (DP) pour commander l'incrémentation de 1 du registre de lecture auxiliaire (ACF) et la décrémentation de 1 du compteur de paquets (RFC).

13. Système de gestion mémoire selon la revendication 12, caractérisé en ce qu'un circuit de détection détecte la mise à zéro du compteur de paquets et commande le rechargement du contenu du registre d'adresse de lecture (RPR) dans le registre de lecture auxiliaire (ACF) et le contenu du registre auxiliaire (SVSLR) dans le compteur de paquets.

14. Système de gestion mémoire selon la revendication 12, caractérisé en ce qu'il comporte un compteur de signaux de fin de paquets (dp), chaque signal de fin de paquet (dp) commandant l'adressage de la mémoire d'adresses (ADD) par le registre de lecture auxiliaire (ACF) pour la lecture d'un paquet en mémoire (MEM), ledit compteur de signaux délivrant le signal de début de paquet (DP) quand il arrive dans une position déterminée.

## Patentansprüche

1. Verfahren zur Speichersteuerung, bei dem die Informationen in Paketen organisiert sind, dadurch gekennzeichnet, daß bei der Aufzeichnung in einem Informationsspeicher (MEM) die Adressen der Pakete in dem Informationsspeicher (MEM) in einem Adressenspeicher (ADD) aufgezeichnet werden und daß die Adresse des Adressenspeichers (ADD), wo sich die Adresse in dem Informationsspeicher des ältesten zu lesenden Paketes befindet, in einem Register für die Leseadresse (RPR) gespeichert wird.

2. Verfahren zur Speichersteuerung nach Anspruch 1, dadurch gekennzeichnet, daß:
- die Informationen der verschiedenen Pakete bei aufeinanderfolgenden Adressen eines Informationsspeichers (MEM) seriell gespeichert werden,
- daß der Beginn jedes Paketes detektiert und seine Adresse (Addi) in dem Informationsspeicher (MEM) identifiziert wird,
- daß diese Adresse (Addi) in dem Adressenspeicher (ADD) bei aufeinanderfolgenden Adressen (Addp) des Adressenspeichers aufgezeichnet wird,
- daß die Adresse (Add0) für den Informationsspeicher (MEM) des ersten Paketes oder seine Adresse (Addp) für den Adressenspeicher (ADD) in einem Register (RPR, RPR') für die Leseadresse gespeichert wird,
- daß bei jedem Aufzeichnen einer Information in dem Informationsspeicher (MEM) die laufende Adresse (Add) dieser Information mit derjenigen (Add0) des letzten Paktes verglichen und im Falle einer Gleichheit der Inhalt des Registers für die Leseadresse RPR um 1 inkrementiert wird.

3. Verfahren nach Anspruch 1, dadurch gekennzeichnet, daß die Zahl der aufgezeichneten Pakete gezählt wird und bei jeder Aufzeichnung eines Pakets in dem Informationsspeicher (MEM) die laufende Adresse für das Aufzeichnen und die Adresse (Addp) aus dem Adressenregister (RPR) verglichen werden und im Falle einer Gleichheit die Zahl der Pakete um 1 verringert wird.

4. Verfahren nach Anspruch 2, dadurch gekennzeichnet, daß bei jeder Aufzeichnung die Adresse (Addp) der Stelle der Speicheradresse (ADD), bei der die Adresse des Paketes in dem Informationsspeicher (MEM) aufgezeichnet wird, mit dem Inhalt des Registers für die Leseadresse (RPR) verglichen und im Falle einer Gleichheit der Inhalt des Registers für die Leseadresse (RPR) um 1 inkrementiert wird.

5. Verfahren nach Anspruch 4, dadurch gekennzeichnet, daß im Falle einer Gleichheit die Anzahl der Pakete um 1 dekrementiert wird.

6. Verfahren nach Anspruch 5, dadurch gekennzeichnet, daß für das Lesen der Informationspakete in dem Informationsspeicher (MEM) zunächst die in dem Register für die Leseadresse (RPR) enthaltene Adresse verwendet wird, um die Adresse des Paketes in dem Speicher (MEM) zu erhalten, und daß bei jedem Lesen eines Paketes die in dem Leseregister (RPR) enthaltene Adresse um 1 inkrementiert und die Anzahl der aufgezeichneten Pakete um 1 dekrementiert wird.

7. Verfahren nach Anspruch 6, dadurch gekennzeichnet, daß der Inhalt des Registers für die Leseadresse (RPR) und die Anzahl der Pakete in zusätzliche Register übertragen werden und daß dann, wenn die Anzahl der Pakete gleich null wird, der Inhalt des Registers für die Leseadresse (RPR) und die Anzahl der Pakete in diesen Registern neu geladen werden.

8. System zur Steuerung eines Speichers zum Aufzeichnen/Lesen von in Paketen organisierten Informationen, enthaltend:
- einen Informationsspeicher (MEM),
- einen ersten Adressenzeiger (MWP), der die Aufzeichnung bei aufeinanderfolgenden Adressen (Add) der verschiedenen aufeinanderfolgenden Informationen ermöglicht,
- einen Adressenspeicher (ADD),
- einen zweiten Zeiger (FSP) für den Adressenspeicher, der eine Adresse (Addp) des Adressenspeichers (ADD) enthält,
- eine Detektierschaltung, die jeden Beginn des Paketes detektiert und bei jeder Detektion das Weiterschreiten des Zeigers (FSP) der Speicheradresse um einen Schritt und die Aufzeichnung einer durch den ersten Zeiger gelieferten Adresse in dem Adressenspeicher bei einer durch den zweiten Zeiger angezeigten Adresse steuert,
- ein Register (RPR) für die Leseadresse, in dem die Adresse (Addp) in dem Adressenspeicher (ADD) für die die Adresse enthaltenden Speicherplatz in dem Informationsspeicher (MEM) des ersten zu lesenden Paketes aufgezeichnet wird.

9. System zur Speicherverwaltung nach Anspruch 8, dadurch gekennzeichnet, daß es folgendes enthält:
eine erste Vergleichsschaltung (COMP1), der jede aufeinanderfolgende Adresse, die in dem ersten Zeiger bei der Adresse des ersten zu lesenden, in dem Adressenspeicher (ADD) enthalten ist, mit der Adresse, die durch das Register der Leseadressen (RPR) angezeigt wird, vergleicht, und daß die Gleichheit zwischen diesen beiden Adressen die Inkrementierung um 1 des Inhalts des Registers für die Leseadresse (RPR) steuert.

10. System zur Steuerung eines Speichers nach Anspruch 9, dadurch gekennzeichnet, daß es ein zusätzliches Register (SVSLR) enthält, in dem die Anzahl der zu lesenden Pakete aufgezeichnet wird, und daß die genannte, durch die erste Vergleichsschaltung bewirkte Gleichheit die Dekrementierung des Inhalts des zusätzlichen Registers (SVSLR) um 1 steuert.

11. System zur Steuerung eines Speichers nach Anspruch 10, dadurch gekennzeichnet, daß
es eine zweite Vergleichsschaltung (COMP2) enthält, die den Inhalt des zweiten Zeigers (FSP) und den Inhalt des Registers für die Leseadresse (RPR) vergleicht und im Falle einer Gleichheit die Inkrementierung des Registers (RPR) für die Leseadresse um 1 und die Dekrementierung des zusätzlichen Registers (SVSLR) um 1 steuert.

12. System zur Steuerung eines Speichers nach einem der Ansprüche 8 bis 11, dadurch gekennzeichnet, daß es folgendes enthält:
- einen dritten Adressenzeiger (BMRP), der das Lesen von unterschiedlichen Informationen aus dem Informationsspeicher (MEM) bei aufeinanderfolgenden Adressen (Add) ermöglicht,
- ein zusätzliches Register (ACF) für die Leseadresse, das die Adressierung des Adressenspeichers (ADD) ermöglicht,
- einen Zähler (RFC) für die übrigen, zu lesenden Pakete,
- einen Befehl (ST) für die Lesefunktion, der das Laden des Inhalts des Registers für die Leseadresse (RPR) in dem zusätzlichen Leseregister (ACF) und den Inhalt des zusätzlichen Registers (SVSLR) in dem Zähler für die Pakete (RFC) steuert, eine Detektierschaltung für das Ende oder den Beginn der Pakete (dp), die ein Paket-Anfangssignal (DP) bilden, das die Inkrementierung des zusätzlichen Leseregisters (ACF) um 1 und die Dekrementierung des Paketzählers (RFC) um 1 steuert.

13. System zur Steuerung eines Speichers nach Anspruch 12, dadurch gekennzeichnet, daß eine Detektierschaltung das Nullsetzen des Paketzählers ermittelt und das erneute Laden des Inhalts des Registers für die Leseadresse (RPR) in dem zusätzlichen Leseregister (ACF) und den Inhalt des zusätzlichen Registers (SVSLR) in dem Paketzähler steuert.

14. System zur Steuerung eines Speichers nach Anspruch 12, dadurch gekennzeichnet, daß es einen Zähler für die Paket-Endsignale (dp) enthält, daß jedes Paket-Endsignal (dp) die Adressierung des Adressenspeichers (ADD) durch das zusätzliche Leseregister (ACF) für das Lesen eines Pakets in dem Speicher (MEM) steuert und daß der Signalzähler das Paket-Anfangssignal (DP) liefert, wenn er in seine Endstellung gelangt.

## Claims

1. Method of memory management according to which the information is organized in packets, characterized in that when recording in an information memory (MEM), the addresses of the packets in the information memory (MEM) are recorded in an address memory (ADD) and in that the address of the address memory (ADD) whereat is located the address in information memory of the oldest packet to be read is recorded in a reading address register (RPR).

2. Method of memory management according to Claim 1, characterized in that:
- the information of the various packets is recorded serially at successive addresses of an information memory (MEM);
- the start of each packet is detected and its address (Addi) in the information memory (MEM) is identified;
- this address (Addi) is recorded in the address memory (ADD) at successive addresses (Addp) of the address memory;
- the address (Add0), relating to the information memory (MEM), of the first packet or its address (Addp), relating to the address memory (ADD), is recorded in a reading address register (RPR, RPR');
- with each recording of an information item in the information memory (MEM), the current address (Add) of this information item is compared with that (Add0) of the first packet, and in the event of equality, the contents of the reading address register RPR are incremented by 1.

3. Method according to Claim 1, characterized in that the number of packets recorded is counted and with each recording of a packet in the information memory (MEM), the current recording address and the address (Add0) supplied by the address register (RPR) are compared, and in the event of equality the number of packets is decreased by 1.

4. Method according to Claim 2, characterized in that with each recording, the address (Addp) of that location of the address memory (ADD) in which the address of the packet in information memory (MEM) is recorded is compared with the contents of the reading address register (RPR), and in the event of equality the contents of the reading address register (RPR) are incremented by 1.

5. Method according to Claim 4, characterized in that in the event of equality the number of packets is decremented by 1.

6. Method according to Claim 5, characterized in that for the reading of the information packets in information memory (MEM), use is firstly made of the address contained in the reading address register (RPR) to obtain the packet address in memory (MEM), and in that with each reading of a packet, the address contained in the reading register (RPR) is incremented by 1 and the number of packets recorded is decremented by 1.

7. Method according to Claim 6, characterized in that the contents of the reading address register (RPR) and the number of packets are transferred into auxiliary registers and when the number of packets becomes zero the contents of the reading address register (RPR) and the number of packets are reloaded into these auxiliary registers.

8. System of memory management for recording/reading information organized in packets comprising:
- an information memory (MEM);
- a first address pointer (MWP) allowing the recording at successive addresses (Add) of the various successive items of information;
- an address memory (ADD);
- a second address memory pointer (FSP) containing an address (Addp) of the address memory (ADD);
- a detection circuit detecting each start of packet and instructing with each detection the advancing by one step of the address memory pointer (FSP) and the recording of an address supplied by the first pointer, in the address memory at the address indicated by the second pointer;
- a reading address register (RPR) in which is recorded the address (Addp), in the address memory (ADD) of the location containing the address, in information memory (MEM) of the first packet to be read.

9. System of memory management according to Claim 8, characterized in that it contains:
- a first comparison circuit (COMP1) comparing each successive address contained in the first pointer with the address of the first packet to be read contained in the address memory (ADD) at the address indicated by the reading address register (RPR), equality between these two addresses instructing the incrementation by 1 of the contents of the reading address register (RPR).

10. System of memory management according to Claim 9, characterized in that it comprises an auxiliary register (SVSLR) in which is recorded the number of packets to be read and in that the said equality established by the first comparison circuit instructs the decrementation by 1 of the contents of the auxiliary register (SVSLR).

11. System of memory management according to Claim 10, characterized in that it comprises a second comparison circuit (COMP2) comparing the contents of the second pointer (FSP) and the contents of the reading address register (RPR), and in the event of equality instructs the incrementation by 1 of the reading address register (RPR) and the decrementation by 1 of the auxiliary register (SVSLR).

12. System of memory management according to one of Claims 8 to 11, characterized in that it comprises:
- a third address pointer (BMRP) allowing the reading at successive addresses (Add) of the information memory (MEM) of various items of information;
- an auxiliary reading address register (ACF) making it possible to address the address memory (ADD);
- a counter of packets remaining to be read (RFC);
a reading operation command (ST) instructing the loading of the contents of the reading address register (RPR) into the auxiliary reading register (ACF) and the contents of the auxiliary register (SVSLR) into the packet counter (RFC); a circuit for detecting the end or start of packets (dp) supplying a start-of-packet signal (DP) for instructing the incrementation by 1 of the auxiliary reading register (ACF) and the decrementation by 1 of the packet counter (RFC).

13. System of memory management according to Claim 12, characterized in that a detection circuit detects the zeroing of the packet counter and instructs the reloading of the contents of the reading address register (RPR) into the auxiliary reading register (ACF) and the contents of the auxiliary register (SVSLR) into the packet counter.

14. System of memory management according to Claim 12, characterized in that it comprises a counter of end-of-packet signals (dp), each end-of-packet signal (dp) instructing the addressing of the address memory (ADD) by the auxiliary reading register (ACF) in respect of the reading of a packet in memory (MEM), the said signal counter delivering the start-of-packet signal (DP) when it arrives in a specified position.
